Zu Viel

## Europäisches Patentamt
## European Patent Office
## Office européen des brevets

(11) Veröffentlichungsnummer: **0 058 363**
A1

(12) # EUROPÄISCHE PATENTANMELDUNG

(21) Anmeldenummer: 82100876.0

(22) Anmeldetag: 08.02.82

(51) Int. Cl.³: **G 03 B 21/132**
G 03 B 1/40, F 16 D 41/12

(30) Priorität: 17.02.81 DE 3105682

(43) Veröffentlichungstag der Anmeldung:
25.08:82 Patentblatt 82/34

(84) Benannte Vertragsstaaten:
DE FR GB IT SE

(71) Anmelder: Pelikan Informationstechnik GmbH & Co.
KG
Griegstrasse 75
D-2000 Hamburg 50(DE)

(72) Erfinder: Jakobson, Hans
Eichendorffstrasse 33
D-2085 Quickborn(DE)

(74) Vertreter: Pretzell, Hellmut, Dipl.-Ing.
Pelikan AG Podbielskistrasse 141 Postfach 103
D-3000 Hannover 1(DE)

(54) Arbeitsprojektor.

(57) Ein Arbeitsprojektor mit verspiegelter Fresnellinse am Arbeitstisch und einseitig über diesem angeordneten Projektor und Lichtquelle und einem an gegenüberliegenden Rändern des Arbeitstisches auf Rollen gewickelten Folienband hat zum Antrieb der Rollen einen endlosen Riemen. Zwischen den Rollenachsen und Riemenscheiben sind gegensinnig wirkende Freilaufkupplungen angeordnet, die einen Eingriff lediglich an der Rolle (9, 10) herstellen, auf die aufgewickelt wird. Hierbei handelt es sich um Rastklinkenkupplungen, deren verschwenkbare Klinke (28, 29) jeweils mit einem Schleppring (34, 35) zum Ausheben oder Eindrücken der Klinke in Abhängigkeit von der Drehrichtung der Riemenscheibe zusammenwirkt.

EP 0 058 363 A1

Fig.3

Croydon Printing Company Ltd.

PELIKAN AKTIENGESELLSCHAFT       28. Oktober 1981
Hannover                          81/16

Pelikan Informationstechnik
GmbH & Co. KG
Griegstr. 75               16. Februar 1981

2000 Hamburg 50          K/Sb - 5957

Anwaltsakte: 5957

## Arbeitsprojektor

Die Erfindung bezieht sich auf einen Arbeitsprojektor mit
verspiegelter Fresnellinse und einseitiger über dieser angeordneten Projektor und Lichtquelle, wobei der Fresnellinse als Arbeitstisch ein über diesen bewegbares Folienband zugeordnet ist, das an gegenüberliegenden Rändern auf
Rollen gewickelt ist, die wahlweise antreibbar sind.

Bei solchen bekannten Arbeitsprojektoren, die oberhalb des
Arbeitstisches in einem Gestell die Lichtquelle und das Objektiv mit einem Umlenkspiegel aufweisen, bildet der Arbeitstisch zugleich die Stehplatte des Gestells des Arbeitsprojektors. Was über ihm angeordnet ist, beeinflußt die optische Auswertung. Der Arbeitstisch selbst als Führung für das
Folienband soll dagegen möglichst flach ausgeführt werden,
um eine kleine Gerätehöhe einzuhalten.

Ursprünglich war es bekannt, die in Halterungen am Arbeitstisch gelagerten Rollen durch Kurbeln oder Drehköpfe anzu-

BAD ORIGINAL

treiben, durch welche die Rollenachsen mitgenommen werden.
Solche Kurbeln oder Drehköpfe müssen, wenn eine sinnvolle Betätigung ermöglicht werden soll, einen Mindestdurchmesser aufweisen. Im Bereich dieses Mindestdurchmessers muß der Arbeitstisch hinsichtlich der Rollenachsen so hoch gebaut werden, daß
eine Bewegung der Betätigungselemente über der Stellfläche des
Arbeitsprojektors möglich ist, ohne daß die Hand einer das Gerät betreibenden Person auf die Stellfläche aufschlägt oder
mit ihr in Berührung kommt.

Es wird bemerkt, daß es bekannt ist, die Rollen an den Arbeitstischen in lösbar angeordneten Haltern anzubringen, so daß eine Auswechselung leicht möglich ist. Zu diesem Zwecke sind im
allgemeinen federnde, vorgespannte Klemmkupplungen angeordnet.

Es ist bereits vorgeschlagen worden, die ungünstigen Betriebsbedingungen für die Kurbeln oder Drehköpfe hinsichtlich der
Arbeitshöhe eines Arbeitstisches dadurch zu beseitigen, daß
als Antriebselement ein Riemen vorgesehen ist, der um den jeweiligen Rollen zugeordnete Riemenscheiben geführt ist. Dadurch ist es möglich, das obenliegende Trum dieses endlosen
Riemens als Handgriff für eine Verstellung zu verwenden; das
untenliegende Trum kann dabei unmittelbar über der Stellfläche verlaufen. Dieser Vorschlag, der an sich schon eine niedrige Bauhöhe des Arbeitstisches berücksichtigt, hat bisher
jedoch zu keinen befriedigenden Ergebnissen geführt. Es war
nicht möglich, mit einem über den Arbeitstisch bewegbaren Folienband eine befriedigende Bewegung desselben ohne auftretende Hinderungen zu verwirklichen. Das liegt daran, daß im allgemeinen ein Transport von einer Rolle zur anderen erfolgt,
und die Aufwickelrolle zunehmend größeren und die Abwickelrolle
zunehmend kleineren Durchmesser erhält. Dadurch drehen sich
bei einem gleichen Bandantrieb beide Rollenachsen mit verschiedenen Drehzahlen. Hierdurch ergeben sich Spannungen beziehungsweise Bremsungen, die nur unter mit die Betriebskräfte überschreitenden Kräften überwunden werden können, wobei entweder
das Folienband reißt, je nach Transportrichtung aber auch Lockerungen oder Falten auftreten können, beziehungsweise die Mechanik des Antriebs in unzulässiger Weise überbeansprucht wird. Aus
diesem Grunde hat sich der in seiner Idee an sich vorteilhafte
Riemenantrieb für einen flachen Aufbau des Arbeitstisches nicht
durchsetzen können.

Der Erfindung liegt die Aufgabe zugrunde, einen Arbeitsprojektor
der eingangs angegebenen Art mit einem Riemenantrieb dahingehend
zu verbessern, daß bei Betätigung des Riemenantriebs über den
jeweiligen Rollen zugeordnete Riemenscheiben eine glatte Folienbandführung ohne Einleitung unzulässig großer Kräfte gewährleistet ist.

Diese Aufgabe wird erfindungsgemäß dadurch gelöst, daß zwischen
den Rollenachsen und den Riemenscheiben gegensinnig wirkende
Freilaufkupplungen angeordnet sind, die einen Eingriff lediglich an der Rolle herstellen, auf die aufgewickelt wird. Hierdurch wird erreicht, daß nur die in Antriebsrichtung vorn liegende Riemenscheibe angetrieben wird, so daß kein bremsender
oder nachfördernder Einfluß der in Transportrichtung hinten
liegenden Rolle entsteht.

Einbezogen wird dabei, daß jeder Rolle eine leicht wirkende
Reibbremse zugeordnet ist, um im Nachlauf bei entkuppelter
Riemenscheibe unkontrollierte Bewegungen zu vermeiden.

Freilaufkupplungen sind in verschiedener Ausführung bekannt.
Im allgemeinen arbeiten sie unter Ausnutzung von Zentrifugalkräften, die sich aus der Drehgeschwindigkeit ergeben. Es sind auch zahlreiche Freilaufkupplungen bekannt, die anwendbar sind, und bei denen der Kupplungseingriff durch Reibungsmittel auf Grund einer Relativbewegung zwischen den zu kuppelnden Teilen hergestellt wird. Die zuerst erwähnten Freilaufkupplungen erfordern einen erheblichen Aufwand, gerade bei der Handbetätigung zum Vorschub des Folienbandes auf einem Arbeitstisch eines Arbeitsprojektors. Die an zweiter Stelle erwähnten Freilaufkupplungen arbeiten demgegenüber mit Reibungsmaterialien zusammen, die sich abnutzen, so daß nach längerer Betriebsdauer eine Änderung im Ansprechvermögen bzw. auch in der Übertragung der Antriebskraft eintritt.

Gemäß einer bevorzugten Ausführungsform der Erfindung ist daher je eine Rastklinkenkupplung mit einem Rastrad an der Rollenachse und einer verschwenkbaren Klinke an der Riemenscheibe sowie einem der Klinke zugeordneten, frei verdrehbar im Kupplungsbereich gelagerten Schleppring zum Ausheben oder Eindrücken der Klinke in Abhängigkeit von der Drehrichtung der Riemenscheibe vorgesehen. Dadurch wird eine Reibungswirkung zum Einsatz der Rastklinkenkupplung vermieden, zugleich aber auch eine Ausführung geschaffen, die selbst bei geringen Antriebsgeschwindigkeiten einen sofort wirksamen Kupplungseingriff oder hinsichtlich der anderen zugeordneten Rastklinkenkupp-lung eine sofort wirksame Freigabe der Kupplung gewährleistet.

Zweckmäßig sind dabei Rasträder mit ihren steileren Flanken und die Klinken - richtung in beiden Kupplungen entgegengerichtet angeordnet.

In der besonders bevorzugten Ausführungsform ist an jeder Riemenscheibe ein axiales Schwenklager für die Klinke angeordnet, welche mit einem Fortsatz mit Spiel in eine Ausnehmung des Schleppringes eingreift, der gegebenenfalls leicht abgebremste, frei verdrehbar in bezug zur Riemenscheibe und Rollenachse gelagert ist und durch den Fortsatz
der Klinke mitnehmbar ist. Dadurch wird mit mechanischen Anschlägen der Eingriff der Kupplung bzw. die Kupplungsöffnung
herbeigeführt, wobei das erwähnte Spiel gering sein kann, um
ein sofortiges Ansprechen zu ermöglichen. Dabei liegt eine vorteilhafte Ausgestaltung nichtnur darin, daß der Schleppring
in axialer Richtung verlaufende Vorsprünge hat, die den Fortsatz an der Klinke einfassen, sondern vor allem in der Ausbildung des Schleppringes mit einem Durchmesser oder Verlauf
näher zur Mittelachse der Rastklinkenkupplung als das Schwenklager der Klinke in bezug zur Mittelachse. Insofern wird dadurch eine Hebelübersetzung für die Steuerung des Eingriffs
oder der Lösung eingeführt, und die Bemessung der Hebellänge
dieser Hebelübersetzung wirkt sich nicht nur in der Geschwindigkeit des Ansprechens, sondern auch hinsichtlich der Eingriffstärke aus.

Die Erfindung wird im folgenden anhand eines Ausführungsbeispiels beschrieben, das in der Zeichnung dargestellt ist. In
der Zeichnung zeigen:

Fig. 1    eine schematische Seitenansicht eines Arbeitsprojektors,

Fig. 2    eine perspektivische Ansicht des allein darge-
          stellten Arbeitstisches eines solchen Arbeits-
          projektors, ohne daß sein Gestell gezeigt ist,

Fig. 3    eine Seitenansicht des Arbeitstisches in schematischer Darstellung, teilweise im Schnitt,

Fig. 4    eine Draufsicht auf eine Riemenscheibe im Schnitt,
          längs der Linie IV - IV in Figur 3, in auseinan-
          dergezogenem Zustand.

BAD ORIGINAL

In allen Figuren sind gleiche Teile mit gleichen Bezugszeichen
bezeichnet.

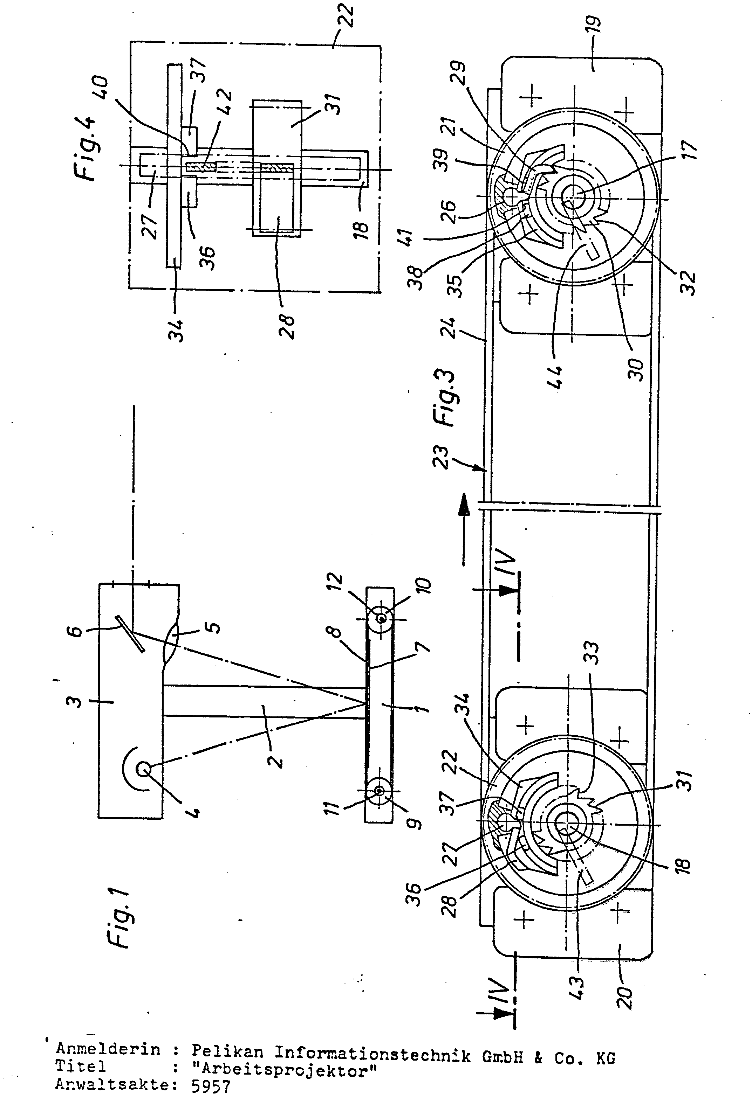

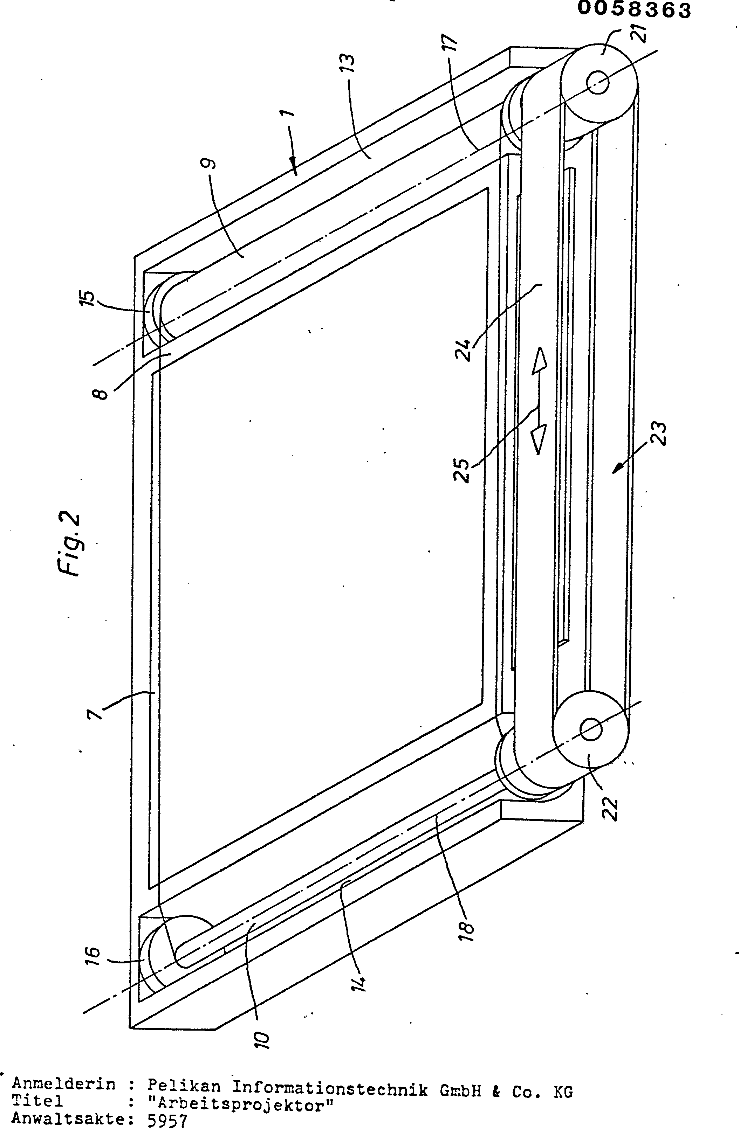

Der bekannte Arbeitsprojektor nach Figur 1 besitzt auf einem
Arbeitstisch 1 ein Gestell 2, in dessen Kopf 3 eine Lichtquelle 4 und ein Objektiv 5, und letzterem zugeordnet ein Umlenk-
-spiegel 6 angeordnet sind. Die Oberseite des Arbeitstisches
wird von einer verspiegelten Fresnellinse 7 gebildet, über die
ein Folienband 8 gezogen wird. Dieses ist an zwei gegenüberliegenden Rändern des Arbeitstisches 1 auf Rollen 9, 10 gewickelt. An den Achsen 11, 12 dieser Rollen sind in Figur 1
nicht näher gezeigte Antriebsmittel angeordnet, um das Folienband 7 in jeder gewünschten Richtung antreiben zu können.

In Figur 2 ist der Arbeitstisch 1 im ganzen für sich gezeichnet. Dabei sind die Rollen 9, 10 erkennbar, wobei im Beispiel
die Rolle 9 einen größeren Vorrat des Folienbandes 8 enthält.
Die Rollen 9, 10 sind in Lageranordnungen 13, 14 des Arbeitstisches 1 einsetzbar. Dabei können bekannte, in Axialrichtung
federnde Aufnahmen 15, 16 angeordnet sein.

Die Achsen 17, 18 der Rollen sind seitlich aus dem Arbeitstisch herausgeführt, und an den Seitenwänden des Arbeitstisches
sind Lageranordnungen 19, 20 für Riemenscheiben 21, 22 befestigt, in welche die Rollenachsen 17, 18 eingreifen. Über die
Riemenscheiben 21, 22 ist ein endloser Riemen 23 geführt, dessen oberes Trum 24 als Handgriff zum Antrieb des Folienbandes
18 in beliebiger Richtung im Sinne des Pfeils 25 dient.

Wie aus Figur 3 und 4 ersichtlich ist, ist in den Riemenscheiben 21, 22, die als Hohlzylinder ausgeführt sind, im Inneren
ein Schwenklager 26, 27 für eine Klinke 28, 29 angeordnet,
welche mit jeweils einem Rastrad 30, 31 zusammenwirkt, das drehfest auf der jeweiligen Rollenachse 17, 18 angeordnet ist.
Die sägezahnartigen Profilierungen 32, 33 der Rasträder sind
gegeneinander gerichtet, und zwar in dem Sinne, daß ein Antrieb des oberen Trum 24 des Riemens 23 in einer Richtung die
jeweils in Antriebsrichtung vorn liegende Rolle 9, 1o bzw. das
ihr zugeordnete Rastrad 3o, 31 mitnimmt. Infolgedessen sind
auch die Klinken 28, 29 einander entgegengesetzt und im Bei-
-spiel nach außen gerichtet.

In den Lageranordnungen 19, 2o sind frei verdrehbar Schleppringe
34, 35 gelagert, die kleineren Radius haben als der radiale Abstand zwischen der Mittelachse einer Riemenscheibe 21, 22 und
der Schwenklagerung 26, 27 für eine Klinke 28, 29 beträgt. Diese
Schleppringe 34, 35 haben axial zur Anordnung vorragende Ansätze
36, 37, 38, 39, die Ausnehmungen 4o, 41 in Umfangsrichtung begrenzen. In diese Ausnehmungen greifen Fortsätze 42 (Fig. 4) an
den Rastklinken 28, 29 ein.

Wenn das obere Trum 24 des Riemens 23 im Sinne des Pfeils in
Fig. 3 bewegt wird, wird die Riemenscheibe 21 im Uhrzeigersinn
mitgenommen und damit auch die Schwenklagerung 26 der Klinke 29.
Sie läuft an den Ansatz 41 und wird dadurch in das Rastrad 3o gedrückt, wobei der Andruck beim weiteren Umlaufen aufrecht erhalten und verstärkt wird, und der Schleppring 35 mitgenommen wird.

Die gleichzeitige Bewegung der Riemenscheibe 22 im Uhrzeigersi-nd führt dazu, daß der Ansatz 37 an den Fortsatz 42 der
Klinke 28 gelangt, wodurch die Klinke auf Grund radialer Versetzung des Anschlags zum Schwenklager 27 aus der Verzahnung
33 des Rastrades 31 ausgehoben wird. Letzteres ist auch wichtig, weil selbst die nachlaufende Rolle, je nach dem noch auf
ihr befindlichen Vorrat, schneller umlaufen kann als die durch
den Riemenantrieb angetriebene Riemenscheibe 22. In dieser Hin-

- 8 -

sicht ist die zwangsläufige Aushebung durch eine mechanische Mitnehmeranordnung von wesentlicher Bedeutung, wobei die Erfindung einfache, mechanische Mittel offenbart. Jeder Rollenachse 17, 18 sind dabei, wie schematisch mit 43, 44 angedeutet, Reibbremsen 43, 44 zugeordnet. Diese Reibbremsen sind in Figur 3 schematisch eingezeichnet. Sie können gemäß Figur 2 im Verlauf der Rollenachsen bzw. auch der Aufnahmen 15, 16 oder dergl. angeordnet sein.

BAD ORIGINAL

PELIKAN AKTIENGESELLSCHAFT          28. Oktober 1981
   Hannover                         81/16


Pelikan Informationstechnik
GmbH & Co. KG
Griegstr. 75                        16. Februar 1981

2000 Hamburg 50                     K/Sb - 5957


Anwaltsakte: 5957


## Patentansprüche

1. Arbeitsprojektor mit verspiegelter Fresnellinse und einseitiger über dieser angeordneten Projektor und Lichtquelle, wobei der Fresnellinse als Arbeitstisch ein über diesen bewegbares Folienband zugeordnet ist, das an gegenüberliegenden Rändern auf Rollen gewickelt ist, die wahlweise antreibbar sind, wobei zum Antrieb ein Riemen vorgesehen ist, der um den jeweiligen Rollen zugeordnete Riemenscheiben geführt ist, dadurch gekennzeichnet, daß zwischen den Rollenachsen (17, 18) und den Riemenscheiben (21, 22) gegensinnig wirkende Freilaufkupplungen angeordnet sind, die einen Eingriff lediglich an der Rolle (9, 10) herstellen, auf die aufgewickelt wird.

2. Arbeitsprojektor nach Anspruch 1, dadurch gekennzeichnet, daß jeder Rolle (9, 10) eine leicht wirkende Reibbremse (43, 44) zugeordnet ist.

3. Arbeitsprojektor nach Anspruch 1 oder 2, gekennzeichnet durch je eine Rastklinkenkupplung mit einem Rastrad (30, 31)

BAD ORIGINAL

an der Rollenachse (17, 18) und einer verschwenkbaren
Klinke (28, 29) an der Riemenscheibe (21, 22) sowie einen
der Klinke zugeordneten, frei verdrehbar im Kupplungsbereich gelagerten Schleppring (34, 35) zum Ausheben oder
Eindrücken der Klinke in Abhängigkeit von der Drehrichtung der Riemenscheibe.

4. Arbeitsprojektor nach Anspruch 3, dadurch gekennzeichnet,
daß die Rasträder (30, 31) mit ihren steileren Flanken und
die Klinkenrichtung in beiden Kupplungen entgegengerichtet
angeordnet sind.

5. Arbeitsprojektor nach Anspruch 3, dadurch gekennzeichnet,
daß an jeder Riemenscheibe (21, 22) ein axiales Schwenklager (26, 27) für die Klinke (28, 29) angeordnet ist, welche mit einem Fortsatz (42) mit Spiel in eine Ausnehmung
(40, 41) des Schleppringes (34, 35) eingreift, der frei
verdrehbar in bezug zur Riemenscheibe (21, 22) und Rollenachse (17, 18) gelagert ist und durch den Fortsatz (42)
der Klinke (28, 29) mitnehmbar ist.

6. Arbeitsprojektor nach Anspruch 5, dadurch gekennzeichnet,
daß der Schleppring (34, 35) in axialer Richtung verlaufende Vorsprünge (36, 37) hat, die den Fortsatz (42) an
der Klinke (28, 29) einfassen, und daß der Schleppring
(34, 35) näher zur Mittelachse der Rastklinkenkupplung verläuft als das Schwenklager (26, 27) der Klinke.

BAD ORIGINAL

Anmelderin : Pelikan Informationstechnik GmbH & Co. KG
Titel : "Arbeitsprojektor"
Anwaltsakte: 5957

*Fig.1*

*Fig.4*

3
6
4
5
2
11
8
12
9
1
7
10

27
40
34
36
37
42
28
31
18
22

36
28
27
37
22
34
*Fig.3*
23
24
38
41
35
26
39
21
29
IV
IV
44
43
33
19
30
20
18
31
32
17

0058363

Fig.2

0058363

Anmelderin : Pelikan Informationstechnik GmbH & Co. KG
Titel      : "Arbeitsprojektor"
Anwaltsakte: 5957

Europäisches
Patentamt

**EUROPÄISCHER RECHERCHENBERICHT**

EP 82 10 0876

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-B-1 153 915 (F. LEITZ GmbH) * Spalte 2, Zeilen 46-67; Spalte 4, Zeilen 1-16; Figuren 1-6 * | 1 | G 03 B 21/132 G 03 B 1/40 F 16 D 41/12 |
| | --- | | |
| A | US-A-2 556 563 (R.L. TOWNSEND) * Spalte 2, Zeilen 28-55; Spalte 3, Zeilen 1-75; Spalte 4, Zeilen 1-18; Figuren 1-5 * | 1-5 | |
| | --- | | |
| A | DE-C- 358 777 (GESELLSCHAFT FUR TECHNISCHE NEUERUNGEN L. BOSSE & CO.) * Seite 2; Figuren 1-5 * | 2,3 | |
| | --- | | |
| A | US-A-3 529 787 (R.J. BOWMAN et al.) * Spalte 4, Zeilen 44-75; Figuren 5,6 * | 6 | |
| | ----- | | RECHERCHIERTE SACHGEBIETE (Int. Cl. ³) |
| | | | G 03 B 21/132 G 11 B 15/50 F 16 D 41/12 G 03 B 21/43 |

Der vorliegende Recherchenbericht wurde für alle Patentansprüche erstellt.

| Recherchenort | Abschlußdatum der Recherche | Prüfer |
|---|---|---|
| DEN HAAG | 28-05-1982 | BOEYKENS J.W. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82